# EUROPÄISCHE PATENTSCHRIFT

(11) **EP 2 950 116 B1**
(45) Veröffentlichungstag und Bekanntmachung des Hinweises auf die Patenterteilung: **13.03.2019**
(21) Anmeldenummer: 15001400.9
(22) Anmeldetag: 08.05.2015
(51) Int. Cl.: G01S 13/00, G01S 13/50, G01S 13/87, G01S 19/14

(54) **VERFAHREN ZUM ERKENNEN DES AUFENTHALTS WENIGSTENS EINES OBJEKTS IN EINEM LUFTRAUM UND/ODER WENIGSTENS EINER EIGENSCHAFT DES OBJEKTS SOWIE ZUGEORDNETE ERFASSUNGSEINRICHTUNG**
METHOD FOR DETECTING THE PRESENCE OF AT LEAST ONE OBJECT IN A SECTION OF AIR AND/OR OF AT LEAST ONE PROPERTY OF THE OBJECT AND ASSOCIATED DETECTION DEVICE
PROCÉDÉ DE RECONNAISSANCE DE LA PRÉSENCE D'AU MOINS UN OBJET DANS UN ESPACE AÉRIEN ET/OU AU MOINS D'UNE CARACTÉRISTIQUE DE L'OBJET ET DISPOSITIF DE DÉTECTION ASSOCIÉ

(30) Priorität: 28.05.2014 DE 102014008215
(43) Veröffentlichungstag der Anmeldung: 02.12.2015
(73) Patentinhaber: Diehl Defence GmbH & Co. KG, 88662 Überlingen (DE)
(72) Erfinder: Wachtl, Stefan, 97422 Schweinfurt (DE); Hertel, Martin, 91207 Lauf (DE); Koch, Volker, 90607 Rückersdorf (DE)
(74) Vertreter: Diehl Patentabteilung

(56) Entgegenhaltungen:
- WO-A1-99/48233
- US-A1- 2002 003 490
- US-A1- 2009 121 940
- US-A1- 2013 050 024
- US-A1- 2013 321 199
- US-B1- 8 610 041
- HOWLAND P F: "Target tracking using television-based bistatic radar", IEE PROCEEDINGS: RADAR, SONAR & NAVIGATION, INSTITUTION OF ELECTRICAL ENGINEERS, GB, Bd. 146, Nr. 3, 3. Juni 1999 (1999-06-03), Seiten 166-174, XP006013673, ISSN: 1350-2395, DOI: 10.1049/IP-RSN:19990322
- Nicholas J. Willis ET AL: "Advances in Bistatic Radar" In: "Advances in Bistatic Radar", 1. Januar 2007 (2007-01-01), SciTech Publishing Inc., XP055218880, ISBN: 978-1-891121-48-7 Seiten 99-99, * Abbildungen 6-10 *

## Beschreibung

Die Erfindung betrifft ein Verfahren zum Erkennen des Aufenthalts wenigstens eines Objekts in einem Luftraum und/oder wenigstens einer Eigenschaft des Objekts.

Die Überwachung eines Luftraums zur Erfassung eindringender Objekte sowie zur Erfassung weiterer Objekteigenschaften wie beispielsweise einer Bewegungsrichtung von Objekten ist sowohl für die Sicherheit der zivilen Luftfahrt als auch für Militär- und Sicherheitsanwendungen wesentlich. Die bekannteste Art der Luftraumüberwachung ist eine Luftraumüberwachung durch aktive Radargeräte, die Radarstrahlung in den Luftraum abstrahlen und reflektierte Radarstrahlung erfassen. Aktive Radarsysteme haben jedoch zahlreiche Nachteile. So benötigt ein aktives Radarsystem mit großer Reichweite große Energiemengen, wodurch aktive Radargeräte mit großer Reichweite wenig mobil und aufwendig aufzubauen sind. Zudem ist insbesondere bei einer Nutzung zur Sicherung eines Luftraums beispielsweise beim Objektschutz, der Grenzsicherung oder dem Feldlagerschutz, nachteilig, dass eine aktive Radaranlage leicht zu lokalisieren und damit besonders leicht angreifbar ist.

Eine alternative Möglichkeit zur Luftraumüberwachung ist die Nutzung passiver Erfassungsgeräte. So ist aus der Druckschrift EP 0 608 732 B1 eine Sensoreinrichtung bekannt, die Funkempfangsverbindungen von mehreren Satelliten aufnimmt und durch einen Vergleich der durch einen potentiellen Angreifer beeinflussten Funkempfangsverbindungen mit den unbeeinflussten Funkempfangsverbindungen ein eindringen in den Luftraum erkennt. Bei sogenannten passiven Radaren werden zusätzlich die Störungen von empfangenen Signalen detailliert ausgewertet um auf eine Flugbahn und/oder die Art beziehungsweise Größe des Objekts zurückzuschließen. Ergänzend werden passive Radarsysteme erforscht, die andere Signalquellen, wie das Sendesignal von Mobiltelefonen, nutzen.

Aus der US 2013/050024 A1 ist ein System mit passiven Erfassungseinrichtungen bekannt, die Funksignale von Satelliten auswerten.
Aus Howland P. F.: "Target tracking using television-based bistatic radar"; IEEE Proceedings: Radar, Sonar & Navigation; Institution of Electrical Engineers, GB, Bd. 146, Nr. 3, 3. Juni 1999 (1999-06-03), Seiten 166-174 ist die Verwendung einer Fernseh-Sendestation als Beleuchter für ein bistatisches Radar bekannt.

Aus der US 2009/121940 A1 ist ein System zur Ermittlung von Positionsinformationen bekannt.

Bei den verschiedenen Passivradarsystemen ist jedoch nachteilig, dass mit diesen Systemen nicht der gesamte Luftraum erfasst werden kann und/oder dass bestimmte Bewegungsmuster von Objekten schlecht erkannt werden. Insbesondere haben passive Erfassungseinrichtungen, die Funksignale von Satelliten auswerten, eine geringe Erfassungsgenauigkeit bei der Erfassung von Objekten mit niedriger Höhe und/oder einem kleinen Elevationswinkel.

Der Erfindung liegt damit die Aufgabe zugrunde, ein Verfahren zur Objekterfassung anzugeben, das demgegenüber, insbesondere bezüglich der Erfassungsgenauigkeit im gesamten beobachteten Luftraum, verbessert ist.

Die Aufgabe wird erfindungsgemäß durch ein Verfahren der eingangs genannten Art gelöst, das die folgenden Schritte umfasst:
- Empfang wenigstens eines durch einen Satelliten abgestrahlten Satellitenfunksignals durch wenigstens eine erste Empfangseinrichtung und wenigstens eines durch einen terrestrischen Sender abgestrahlten terrestrischen Funksignals durch wenigstens eine zweite Empfangseinrichtung,
- Ermittlung einer ersten Störinformation, die eine Störung des Satellitenfunksignals durch das Objekt beschreibt, und einer zweiten Störinformation, die eine Störung des terrestrischen Funksignals durch das Objekt beschreibt, durch eine Signalverarbeitungseinrichtung, und
- Ermittlung, ob sich das Objekt im Luftraum befindet und/oder der Eigenschaft des Objekts durch gemeinsame Auswertung der ersten und der zweiten Störinformation durch die Signalverarbeitungseinrichtung.

Damit wird erfindungsgemäß vorgeschlagen, zur Erkennung des Aufenthalts eines Objekts in einem Luftraum beziehungsweise zur Ermittlung von dessen Eigenschaften Funksignale aus verschiedenen Quellen mit stark unterschiedlicher geometrischer Anordnung zu nutzen. Es werden sowohl Funksignale ausgewertet, die von großer Höhe auf das Objekt eingestrahlt werden, durch das Objekt gestreut werden und anschließend erfasst werden, als auch Funksignale, die vom Boden aus auf das Objekt eingestrahlt, dort reflektiert und anschließend erfasst werden. Dabei können vorteilhaft Signale mehrerer Satelliten und/oder mehrerer terrestrischer Sender erfasst werden. Die genutzte Empfangseinrichtung weist hierzu vorteilhaft wenigstens eine Antenne zum Empfang von Satellitenfunksignalen und wenigstens eine Antenne zum Empfang von terrestrischen Funksignalen auf. Vorzugsweise sind jedoch jeweils mehrere Antennen vorgesehen, um Signale aus mehreren Richtungen zu erfassen und/oder Signale in unterschiedlichen Frequenzbändern zu erfassen. Alternativ oder ergänzend können auch Antennen genutzt werden, die um eine vorgegebene Achse rotieren, um zeitversetzt Signale aus verschiedenen Richtungen zu erfassen.

Als Eigenschaft des Objekts werden insbesondere Informationen über den Ort des Objekts und die relative Geschwindigkeit des Objekts zum Empfänger erfasst. Ergänzend können Informationen über die Art und/oder die Größe des Objekts aus der Rückstreucharakteristik des Objekts gewonnen werden. Dabei wird ausgenutzt, dass ein ursprüngliches Sendesignal des Satelliten oder des terrestrischen Senders bekannt ist oder zusätzlich zum am Objekt gestreuten Signal empfangen wird oder aus dem am Objekt gestreuten Signal zumindest teilweise rekonstruiert werden kann, beispielsweise durch Fehlerkorrektur bei digitalen Satellitenfunk- und/oder terrestrischen Funksignalen. Ein Eindringen eines Objekts in den Luftraum kann insbesondere dadurch erkannt werden, dass eine plötzliche Änderung am Signal durch die Störung durch das Objekt erfolgt. Durch eine Auswertung, welche der empfangenen Signale gestört sind, können zudem erste Positionsinformationen über das Objekt gewonnen werden. So wird beispielsweise ein Satellitenfunksignal besonders dann stark gestört, wenn sich das Objekt im Bereich zwischen Satellit und Empfangseinrichtung befindet.

Dabei ist es insbesondere möglich, dass die erste und/oder die zweite Störinformation in Abhängigkeit einer Dopplerverschiebung wenigstens eines Frequenzbandes des Satellitenfunksignals beziehungsweise des terrestrischen Funksignals aufgrund einer Streuung am Objekt ermittelt werden. Die Dopplerverschiebung des empfangenen Signals bestimmt sich in Abhängigkeit einer Relativbewegung des Objekts zu der Quelle des entsprechenden Signals, also dem Satelliten beziehungsweise dem terrestrischen Sender und einer Relativbewegung des Objekts zu der ersten beziehungsweise der zweiten Empfangseinrichtung. Eine Dopplerverschiebung kann bei einem bekannten Ursprungssignal beziehungsweise bei einer bekannten Trägerfrequenz des Ursprungssignals beispielsweise durch Nutzung eines phasenstarren Regelkreises mit einer sehr schmalen Bandbreite des Schleifenfilters ermittelt werden. Die Frequenz eines Oszillators des Regelkreises folgt dann nicht der Modulation des Empfangssignals, sondern ausschließlich einer Frequenzverschiebung des Trägersignals, wie sie durch ein streuendes Objekt erzeugt wird. Alternativ kann auch die Phasenlage des gestreuten Satellitenfunksignals beziehungsweise des gestreuten terrestrischen Funksignals bezüglich eines Signals mit der Frequenz des nicht gestreuten Signals ermittelt werden. Die zeitliche Änderung der Phasenlage zwischen dem Signal auf der ursprünglichen Frequenz und dem dopplerverschobenen gestreuten Signal ermöglicht dabei die Bestimmung der Dopplerverschiebung. Nach einer Digitalisierung des Satellitenfunksignals beziehungsweise des terrestrischen Funksignals kann eine Änderung der Phasenlage auch dadurch ermittelt werden, dass das empfangene gestreute Signal Fourier transformiert wird, wobei bei einer diskreten Fouriertransformation die Frequenzen der Transformation derart gewählt sind, dass die ursprüngliche Frequenz des Satellitenfunksignals beziehungsweise des terrestrischen Funksignals auf eine Frequenz der Transformation fällt. Wird eine derartige Transformation für mehrere zeitliche beabstandete Blöcke durchgeführt, so wird durch die Fouriertransformation eine relative Phasenverschiebung zwischen den Blöcken ermittelt, die wie oben beschrieben ausgewertet werden kann.

Im erfindungsgemäßen Verfahren ist vorteilhaft die Position des Satelliten und/oder des terrestrischen Senders bekannt. Die ermittelte Dopplerverschiebung ist von der Geschwindigkeit der Abstandsänderung zwischen dem Objekt und dem Satelliten beziehungsweise dem terrestrischen Sender und der Geschwindigkeit der Abstandsänderung zwischen dem Objekt und der Empfangseinrichtung, und damit von der Position des Objekts, der Bewegungsgeschwindigkeit und der Bewegungsrichtung abhängig. Bei einem Empfang von mehreren Satellitenfunksignalen und/oder mehreren terrestrischen Funksignalen ist es daher möglich, bereits allein aus der Dopplerverschiebung der verschiedenen Signale sowohl den Ort als auch die Geschwindigkeit des Objekts zu bestimmen.

Alternativ oder ergänzend kann die Laufzeit des Satellitenfunksignals und/oder des terrestrischen Funksignals ausgewertet werden. Wird das Satellitenfunksignal beziehungsweise das terrestrische Funksignal an einem Objekt reflektiert, das von einer Verbindungslinie zwischen Satellit beziehungsweise terrestrischem Sender und der zugeordneten Empfangseinrichtung beabstandet ist, so legt das reflektierte Signal einen längeren Weg zurück und hat damit auch eine längere Signallaufzeit als ein direkt empfangenes Signal. Dabei kann das Satellitenfunksignal und/oder das terrestrische Funksignal insbesondere einen direkt vom Satellit beziehungsweise vom terrestrischen Sender empfangenen Signalanteil und einen am Objekt gestreuten Signalanteil umfassen, wobei die erste und/oder die zweite Störinformation in Abhängigkeit eines Laufzeitunterschieds zwischen dem direkt empfangenen und dem gestreuten Signal bestimmt werden. Dies ist insbesondere durch eine Korrelation zwischen dem direkt empfangenen und dem gestreuten Signalanteil möglich. Vor der Korrelation können insbesondere Dopplerverschiebungen des gestreuten Signals kompensiert werden.

Ein Laufzeitunterschied kann insbesondere auch ohne Berücksichtigung eines direkt empfangenen Signals bestimmt werden, wenn dem Satellitenfunksignal beziehungsweise dem terrestrischen Funksignal eine eindeutige Zeitinformation zugeordnet ist. Beispielsweise übertragen Navigationssatelliten eine eindeutige Zeitkodierung, die einen Sendezeitpunkt des Signals eindeutig bestimmt. Durch einen Vergleich des kodierten Sendezeitpunkts mit dem Empfangszeitpunkt beziehungsweise mit dem Sendezeitpunkt anderer empfangener Signale, die zur gleichen Zeit empfangen wurden, kann ebenfalls ein Laufzeitunterschied ermittelt werden. Eine Ermittlung eines Laufzeitunterschieds ohne einen direkt empfangenen Signalanteil ist insbesondere vorteilhaft, wenn der terrestrische Sender oder der Satellit derart positioniert ist, dass durch die entsprechende Empfangseinrichtung kein Signal direkt empfangen werden kann.

Ergänzend oder alternativ zu Dopplerverschiebungen und Laufzeitunterschieden können auch die Phase, die Amplitude und/oder die Polarisation des Satellitenfunksignal beziehungsweise des terrestrischen Funksignals ausgewertet werden und insbesondere mit der Phase, Amplitude und/oder Polarisation eines nicht durch das Objekt gestreuten Signals verglichen werden, um die erste beziehungsweise die zweite Störinformation zu ermitteln. Durch einen Amplitudenvergleich kann insbesondere auch erfasst werden, wenn das Satellitenfunksignal oder das terrestrische Funksignal durch ein in den Luftraum eingedrungenes Objekt ausschließlich abgeschwächt wird. Damit können insbesondere auch Objekte erkannt werden, die einen geringen Reflexionsgrad für die genutzten Funksignale aufweisen.

Im erfindungsgemäßen Verfahren kann das Vorhandensein eines Objekts im Luftraum auch erkannt werden, wenn ausschließlich aus der ersten und/oder ausschließlich aus der zweiten Störinformation ein Vorhandensein des Objekts im Luftraum ermittelt wird. Dabei wird erfindungsgemäß ausgenutzt, dass Flugobjekte mit hoher Flughöhe und/oder einem großen Elevationswinkel tendenziell Satellitenfunksignale stärker stören als terrestrische Funksignale und Flugobjekte mit einer geringen Flughöhe und/oder einem geringen Elevationswinkel tendenziell terrestrische Funksignale stärker stören als Satellitenfunksignale. Die erste Störinformation und die zweite Störinformation weisen also unterschiedliche Empfindlichkeiten bezüglich unterschiedlicher Bereiche des Luftraums, in denen sich das Objekt befindet, und bezüglich unterschiedlicher Bewegungsrichtungen beziehungsweise Bewegungsmuster des in den Luftraum eingedrungenen Objekts auf.

Alternativ kann vorgesehen sein, ein Vorhandensein eines Objekts im Luftraum nur dann zu erkennen, wenn sowohl aus der ersten als auch aus der zweiten Störinformation ein Vorhandensein des Objekts im Luftraum ermittelt wird. Besonders vorteilhaft kann auch eine erste Warnstufe vorgesehen sein, wenn nur eine der Störinformationen ein Vorhandensein des Objekts im Luftraum anzeigt und eine zweite, wenn dies durch beide Störinformationen angezeigt wird.

Es ist möglich, dass wenigstens eine Eigenschaft des Objekts ausschließlich aus der ersten Störinformation und wenigstens eine weitere Eigenschaft des Objekts ausschließlich auf der zweiten Störinformation ermittelt wird. Beispielsweise ist es möglich, eine vertikale Objektgeschwindigkeit ausschließlich aus der ersten Störinformation, also durch Auswertung des Satellitenfunksignals, und eine horizontale Objektgeschwindigkeit ausschließlich aus der zweiten Störinformation, also durch Auswertung des terrestrischen Funksignals, zu bestimmen. Abhängig von dem oder den konkret genutzten Satelliten und terrestrischen Sendern können verschiedene Eigenschaften von Objekten vorteilhaft aus der ersten beziehungsweise der zweiten Störinformation ermittelt werden.

Als terrestrischer Sender kann insbesondere ein Rundfunksender oder ein einem Mobilfunknetz zugeordneter Sender verwendet werden. Alternativ oder ergänzend wäre auch eine Nutzung von Funksendern, die Drahtlosnetzwerken zugeordnet sind, oder ähnliches möglich. Bei der Nutzung mehrerer terrestrischer Sender im erfindungsgemäßen Verfahren können auch terrestrische Sender genutzt werden, die verschiedenen Aufgaben zugeordnet sind, beispielsweise ein oder mehrere Rundfunksender und gleichzeitig ein oder mehrere einem Mobilfunknetz zugeordnete Sender.

Als Satellit kann insbesondere ein einem Positionsbestimmungssystem geordneter Satellit, ein Kommunikationssatellit oder ein Rundfunksatellit verwendet werden. Navigationssatelliten können insbesondere dem GPS- oder dem Galileo-System angehören. Vorteilhaft bei der Nutzung eines Signals eines einem Positionsbestimmungssystem zugeordneten Satelliten ist, dass diese Signale typischerweise eine explizite Zeitinformation umfassen oder kodieren, womit Laufzeitunterschiede besonders leicht ermittelt werden können. Beim Empfang von Satellitenfunksignalen mehrerer Satelliten können auch Signale von Satelliten mit unterschiedlichen Zwecken, beispielsweise ein oder mehrere Signale von Rundfunksatelliten und ein oder mehrere Signale von Kommunikationssatelliten, empfangen werden.

Es ist besonders vorteilhaft, wenn der terrestrische Sender und/oder der Satellit Nutzinformationen digital übertragen. Bei einer digitalen Signalübertragung kann selbst bei relativ geringem Signal-Rausch-Verhältnis ein ursprüngliches Sendesignal vollständig rekonstruiert werden, wodurch insbesondere die Trennung zwischen einem direkt empfangenen Signalanteil und einem durch das Objekt gestreuten Signalanteil erleichtert wird. Auch die Erkennung von Frequenzverschiebungen, Phasenverschiebungen und Amplitudenänderungen ist bei der Nutzung von digitalen Signalen verbessert.

Um möglichst exakte und eindeutige Informationen über insbesondere den Ort und die Bewegungsrichtung und Geschwindigkeit eines Objekts zu ermitteln ist es vorteilhaft, möglichst viele Störinformationen, die jeweils einem empfangenen Satellitenfunksignal beziehungsweise terrestrischen Funksignal zugeordnet sind, zu berücksichtigen. Dies kann erreicht werden, wenn die Satellitenfunksignale mehrerer Satelliten und/oder die terrestrischen Funksignale mehrerer terrestrischer Sender empfangen und ausgewertet werden. Alternativ oder ergänzend können zur Gewinnung zusätzlicher Störinformationen auch mehrere Empfangseinrichtungen für das gleiche Signal genutzt werden. Es ist daher besonders vorteilhaft, wenn mehrere erste und/oder zweite Empfangsvorrichtungen genutzt werden, die räumlich beabstandet sind. Der Abstand zwischen den Empfangsvorrichtungen kann dabei beispielsweise größer als 10 m, größer als 100 m oder größer als 1 km sein. Durch die Nutzung mehrerer Empfangsvorrichtungen, die räumlich beabstandet sind, können insbesondere mehrere Laufzeitunterschiede zwischen am Objekt gestreuten und nicht gestreuten Signalen beziehungsweise mehrere Dopplerverschiebungen aufgrund des Objekts bestimmt und ausgewertet werden.

Daneben betrifft die Erfindung eine Erfassungseinrichtung zum Erkennen des Aufenthalts wenigstens eines Objekts in einem Luftraum und/oder wenigstens einer weiteren Eigenschaft des Objekts. Dabei weist die Erfassungseinrichtung wenigstens eine erste Empfangseinrichtung zum Empfang wenigstens eines durch einen Satelliten abgestrahlten Satellitenfunksignals und wenigstens eine zweite Empfangseinrichtung zum Empfang eines durch einen terrestrischen Sender abgestrahlten terrestrischen Funksignals sowie eine Signalverarbeitungseinrichtung auf. Die Signalverarbeitungseinrichtung dient zur Ermittlung einer ersten Störinformation, die eine Störung des Satellitenfunksignals durch das Objekt beschreibt, und einer zweiten Störinformation, die eine Störung des terrestrischen Funksignals durch das Objekt beschreibt, sowie zur Ermittlung, ob sich das Objekt im Luftraum befindet und/oder der Eigenschaft des Objekts durch gemeinsame Auswertung der ersten und der zweiten Störinformation.

Die Signalverarbeitungseinrichtung kann dabei zur Ermittlung der ersten und/oder der zweiten Störinformation in Abhängigkeit einer Dopplerverschiebung wenigstens eines Frequenzbandes des Satellitenfunksignals beziehungsweise des terrestrischen Funksignals aufgrund einer Streuung am Objekt ausgebildet sein.

Der terrestrische Sender kann dabei insbesondere ein Rundfunksender oder ein einem Mobilfunknetz zugeordneter Sender sein. Der Satellit kann ein einem Positionsbestimmungssystem zugeordneter Satellit, ein Kommunikationssatellit oder ein Rundfunksatellit sein.

Die erfindungsgemäße Empfangseinrichtung kann dabei gemäß der weiteren mit Bezug auf das erfindungsgemäße Verfahren offenbarten Merkmale weitergebildet werden.

Weitere Vorteile und Einzelheiten der Erfindung ergeben sich aus den folgenden Ausführungsbeispielen sowie den zugehörigen Zeichnungen. Dabei zeigen:
- Fig. 1: schematisch die Überwachung eines Luftraums durch ein Ausführungsbeispiel der erfindungsgemäßen Erfassungseinrichtung,
- Fig. 2: schematisch die Erfassung eines in einen Luftraum eingedrungenen Objekts durch ein Ausführungsbeispiel des erfindungsgemäßen Verfahrens,
- Fig. 3: schematisch ein Ablaufdiagramm eines Ausführungsbeispiels eines erfindungsgemäßen Verfahrens, und
- Fig. 4: schematisch ein Ausführungsbeispiel einer erfindungsgemäßen Erfassungseinrichtung.

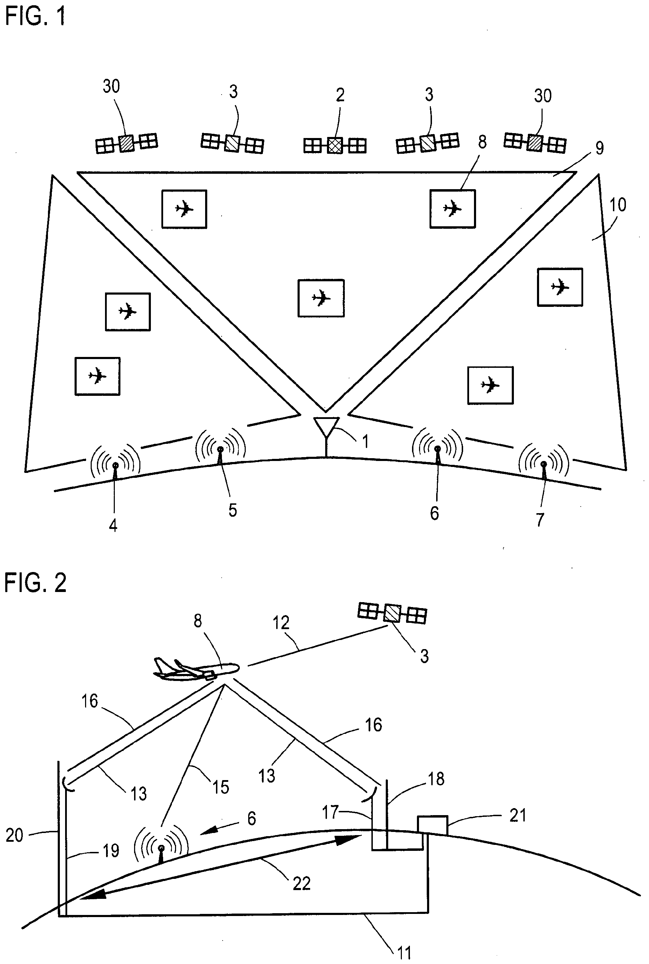

Fig. 1 zeigt schematisch die Überwachung eines Luftraums durch eine Erfassungseinrichtung 1 zum Erkennen des Aufenthalts wenigstens eines Objekts in dem Luftraum und zur Ermittlung weiterer Eigenschaften des Objekts. Die Erfassungseinrichtung 1 weist mehrere Empfangseinrichtungen auf, wobei mehrere erste Empfangseinrichtungen zum Empfang der Satellitenfunksignale der Satelliten 3, 2, 30 dienen und mehrere zweite Empfangseinrichtungen zum Empfang der terrestrischen Sender 4, 5, 6, 7 dienen. Dabei sind zwei der Satelliten Fernsehsatelliten 30, einer der Satelliten ein Kommunikationssatellit 2 und zwei der Satelliten Satelliten 3, die einem Positionsbestimmungssystem, insbesondere einem GPS-System, zugeordnet sind. Der terrestrische Sender 4 ist einem drahtlosen Computernetzwerk zugeordnet, der terrestrische Sender 5 ist eine Mobilfunkbasisstation, der terrestrische Sender 6 ist ein Fernsehsender und der terrestrische Sender 7 ist ein Radiosender.

Dringt ein Objekt 8, beispielsweise ein Flugzeug, in den Luftraum und insbesondere in einen der Überwachungsbereiche 9, 10 ein, so werden durch das Objekt 8 zumindest Teile der Satellitenfunksignale der Satelliten 3, 2, 30 und/oder der terrestrischen Funksignale der terrestrischen Sender 4, 5, 6, 7 gestört. Eine derartige Störung erfolgt insbesondere durch eine Streuung des Satellitenfunksignals beziehungsweise des terrestrischen Funksignals. Ergänzend kann jedoch auch eine Reduzierung der Signalamplitude durch eine Abschattung des entsprechenden Satelliten oder terrestrischen Senders beobachtet werden. Da die Empfangseinrichtung 1 die Satellitenfunksignale und die terrestrischen Funksignale empfängt, können Abschattungen des Signals durch Amplitudenänderungen und Reflexionen des Signals an den Objekten 8 durch Auswertung weiterer Signaleigenschaften erfasst werden. Reflexionen eines oder mehrerer Satellitenfunksignale beziehungsweise terrestrischer Funksignale an einem der Objekte 8 werden erkannt, indem der reflektierte Signalanteil von einem direkt empfangenen Signalanteil separiert und eine Frequenzverschiebung und/oder eine Laufzeit des reflektierten Signalanteils ausgewertet wird. Wird ein Satellitenfunksignal oder ein terrestrisches Funksignal an einem der Objekte 8 reflektiert, so legt das empfangene Signal auf dem Weg vom Satelliten 3, 2, 30 beziehungsweise dem terrestrischen Sender 4, 5, 6, 7 zur zugehörigen Empfangseinrichtung einen längeren Weg zurück als bei einer direkten Übertragung. Dies führt zu einer längeren Signallaufzeit, wobei aus dem Laufzeitunterschied eine Rotationselipse bestimmbar ist, auf der das Objekt 8 liegt. Zudem wird durch die Erfassungseinrichtung 1 eine Dopplerverschiebung der Frequenz des gestreuten Satellitenfunksignals beziehungsweise des terrestrischen Funksignals bestimmt, die von der Geschwindigkeit der Abstandsänderung des Objekts 8 zum Sender, also dem Satelliten 3, 2, 30 beziehungsweise dem terrestrischen Sender 4, 5, 6, 7, sowie von der Geschwindigkeit der Abstandsänderung zur jeweiligen Empfangseinrichtung abhängt. Aus der Dopplerverschiebung der Frequenz des jeweiligen Signals lässt sich insbesondere eine Bewegungsgeschwindigkeit des Objekts, jedoch in Zusammenschau von mehreren Dopplerverschiebungen mehrerer Signale auch ein Objektort bestimmen. Da in den Überwachungsbereichen 9, 10 jeweils mehrere Satellitenfunksignale und/oder terrestrische Funksignale an jedem der Objekte 8 gestreut werden, können aus den jeweiligen Laufzeitunterschieden und/oder Dopplerverschiebungen der Signale sowohl die Position des Objekts 8 als auch seine Bewegungsrichtung und Geschwindigkeit bestimmt werden.

Der Überwachungsbereich 9 markiert den Bereich, in den die Objekte 8 besonders gut anhand einer ersten Störinformation, die eine Störung von Satellitenfunksignalen beschreibt, erkannt werden können. Der Überwachungsbereich 9 erstreckt sich dabei im Wesentlichen kegelförmig oberhalb der Erfassungseinrichtung 1 beziehungsweise der Empfangseinrichtungen der Erfassungseinrichtung 1. Objekte im Überwachungsbereich 10 können hingegen besonders gut durch eine zweite Störinformation, die aus einer Störung wenigstens eines terrestrischen Funksignals ermittelt wird, erkannt werden. Der Überwachungsbereich 10 ist grob torusförmig und erstreckt sich radial um die Erfassungseinrichtung 1 beziehungsweise die Empfangseinrichtungen der Erfassungseinrichtung 1. Um jegliches Eindringen in den beobachteten Luftraum zu erfassen, wird das Vorhandensein des Objekts 8 im Luftraum bereits dann erkannt, wenn ausschließlich die erste Störinformation oder ausschließlich die zweite Störinformation ein Vorhandensein des Objekts 8 im Luftraum indiziert. Damit werden sowohl Objekte 8 im Überwachungsbereich 10 als auch Objekte 8 im Überwachungsbereich 9 zuverlässig erfasst.

Während die Überwachungsbereiche 9 und 10 in Fig. 1 schematisch als separate Bereiche dargestellt sind, stören dennoch Objekte 8 im Überwachungsbereich 9 selbstverständlich auch terrestrische Funksignale und Objekt 8 im Überwachungsbereich 10 Satellitenfunksignale. Damit können für ein einzelnes Objekt 8 sowohl auch aus Störinformationen der Satellitenfunksignale als auch aus Störinformationen der terrestrischen Funksignale Informationen über Objekteigenschaften gewonnen werden. In der Erfassungseinrichtung 1 wird dies ausgenutzt, um zur Bestimmung von Eigenschaften des Objekts 8, insbesondere der Position und der Geschwindigkeit des Objekts 8, beide Arten von Störinformationen heranzuziehen.

Dabei ist es möglich, dass einzelne Störinformationen eines einzelnen Satellitenfunksignals oder eines einzelnen terrestrischen Funksignals anzeigen, dass dieses Funksignal nicht gestört ist. Wird im Rahmen der Ermittlung der Störinformation beispielsweise ein Laufzeitunterschied untersucht und das Objekt 8 befindet sich auf der Verbindungslinie zwischen einem Satelliten und der Empfangseinrichtung; so wird keine Änderung der Signallaufzeit ermittelt. Die Störinformation zeigt damit an, dass keine Störung vorliegt. Da die Erfassungseinrichtung 1 jedoch die Satellitenfunksignale einer Vielzahl von Satelliten 3, 2, 30 und einer Vielzahl von terrestrischen Funksignalen von terrestrischen Sendern 4, 5, 6, 7 erfasst, wird bei einem Aufenthalt des Objekts 8 in den Überwachungsbereichen 9, 10 stets für wenigstens eines der Satellitenfunksignale oder der terrestrischen Funksignale eine Störinformation ermittelt, die eine Störung des entsprechenden Signals anzeigt. Objekte 8 im Überwachungsbereich 9 und 10 werden damit zuverlässig erkannt.

Figur 2 zeigt schematisch den Empfang eines Satellitenfunksignals 12, 13 und eines terrestrischen Funksignals 15, 16 in einem Verfahren zum Erkennen des Aufenthalts wenigstens eines Objekts 8 in einem Luftraum und der Eigenschaften des Objekts 8. Dabei wird eine Erfassungseinrichtung genutzt, die zwei erste Empfangseinrichtungen 17, 19 zum Empfang von Satellitenfunksignalen des Satelliten 3 und zwei zweite Empfangseinrichtungen 18, 20 zum Empfang des terrestrischen Funksignals des terrestrischen Senders 6 sowie eine mit den Empfangseinrichtungen 17, 18, 19, 20 über ein Kommunikationsnetzwerk 11 verbundenen Signalverarbeitungseinrichtung 21 umfasst. Die beiden ersten und zweiten Empfangsvorrichtungen 17, 18, 19, 20 sind durch den Abstand 22, beispielsweise einem Kilometer, beabstandet.

Das durch den Satelliten 3 ausgesandte Satellitenfunksignal 12 wird durch das Objekt 8 gestreut. Dabei wird das gestreute Satellitenfunksignal 13 erzeugt, wobei das streuende Objekt 8 als Punktquelle für das gestreute Satellitenfunksignal 13 betrachtet werden kann. Das gestreute Satellitenfunksignal 13 wird durch die beiden ersten Empfangseinrichtungen 17 und 19 empfangen. Um die Darstellung übersichtlich zu halten, ist der direkte Empfang des durch den Satelliten 3 abgestrahlten Satellitenfunksignals 12 durch die beiden ersten Empfangseinrichtungen 17, 19 nicht dargestellt. Entsprechend wird das durch den terrestrischen Sender 6 abgestrahlte terrestrische Signal 15 durch das Objekt 8 gestreut und das gestreute terrestrische Signal 16 wird durch die beiden zweiten Empfangseinrichtungen 18, 20 empfangen.

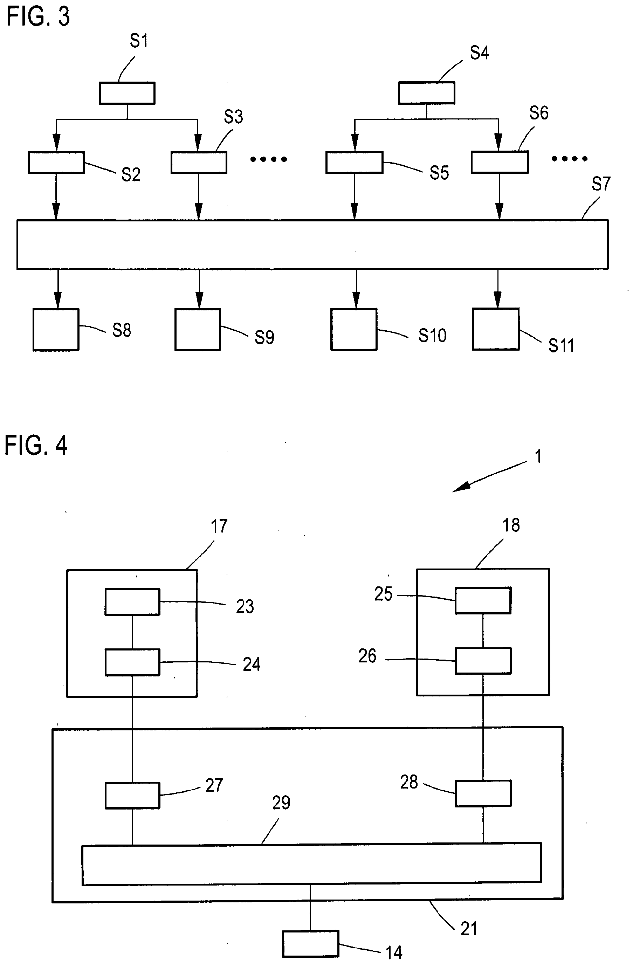

Die Bestimmung von jeweils zugeordneten Störinformationen wird im Folgenden mit Bezug auf Figur 3 erläutert. Durch die Nutzung mehrerer erster und zweiter Empfangseinrichtungen 17, 18, 19, 20 vervielfacht sich die Anzahl der empfangenen Signale und damit auch die Anzahl der Störinformationen. Im in Figur 2 gezeigten Fall stehen beispielsweise ausgehend von zwei Signalquellen, nämlich dem terrestrischen Sender 6 und dem Satelliten 3, vier Empfangssignale und damit auch vier Störinformationen bereit. Da eine einzelne Störinformation insbesondere einen Laufzeitunterschied und eine Dopplerverschiebung erfassen kann, liegen damit bereits acht Parameter vor, die das Objekt 8 beschreiben, womit beispielsweise eine eindeutige Bestimmung von Position und Geschwindigkeit des Objekts möglich ist.

Figur 3 zeigt ein Ausführungsbeispiel eines Verfahrens zum Erkennen des Aufenthalts wenigstens eines Objekts in einem Luftraum und mehrere Eigenschaften des Objekts. In Schritt S1 wird ein durch einen Satelliten abgestrahltes Satellitenfunksignal durch eine erste Empfangseinrichtung empfangen In den Schritten S2 und S3 wird aus diesem Empfangssignal eine erste Störinformation ermittelt. Die erste Störinformation umfasst dabei Informationen über eine mögliche Laufzeitänderung des Empfangssignals aufgrund einer Steuerung am Objekt, die in Schritt S2 ermittelt werden, und Informationen über eine mögliche Frequenzänderung des Empfangssignals aufgrund einer Dopplerverschiebung durch Streuung äm Objekt, die in Schritt S3 ermittelt werden.

In Schritt S2 wird ein Laufzeitunterschied zwischen einem direkt vom Satelliten empfangenen Signalanteil und dem an einem Objekt gestreuten Signalanteil erfasst. Hierbei wird ausgenutzt, dass bei einer digitalen Signalübertragung durch den Satelliten selbst bei einem stark gestörten Empfangssignal das ursprüngliche Sendesignal des Satelliten vollständig rekonstruiert werden kann. Damit kann der am Objekt gestreute Signalanteil, trotz einer typischerweise weit kleineren Amplitude als der direkt empfangene Signalanteil, ausreichend vom direkt empfangenen Signalanteil separiert werden, um einen Laufzeitunterschied zu bestimmen. Der Laufzeitunterschied zwischen den Signalanteilen wird dabei durch eine Korrelation des direkt empfangenen Signalanteils und des am Objekt gestreuten Signalanteils bestimmt.

Alternativ wäre es in Schritt S2 möglich, wenn das Satellitenfunksignal eine explizite oder implizite Zeitkodierung enthält, wie insbesondere bei Satelliten eines Positionsbestimmungssystems üblich, den Laufzeitunterschied direkt durch Auswertung der im gestreuten Signal kodierten Zeitinformation zu bestimmen. Dabei kann insbesondere eine interne Zeitreferenz der Erfassungseinrichtung genutzt werden, die durch Zeitinformationen eines oder mehrerer direkt empfangener Satellitensignale synchronisiert ist.

In Schritt S3 wird eine Frequenzverschiebung des gestreuten Signalanteils durch eine Dopplerverschiebung ermittelt. Die ermittelnde Dopplerverschiebung ist dabei abhängig von der zeitlichen Änderung des Abstands des Objekts zum Satelliten, dessen Signal empfangen wird und zur Empfangseinrichtung, durch die das Signal empfangen wird. Zur Bestimmung der Frequenzverschiebung wird eine blockweise diskrete Fouriertransformation des Signals genutzt, wobei die Frequenzen der diskreten Fouriertransformation so gewählt sind, dass eine der Transformationsfrequenzen mit der Trägerfrequenz, mit der der entsprechende Satellit das empfangene Signal sendet, zusammenfällt. Werden über einen Satelliten Signale auf mehreren Trägerfrequenzen gesendet, so können zunächst die Frequenzbänder separiert werden und es kann entweder für eines oder für mehrere dieser Frequenzbänder eine Frequenzverschiebung bestimmt werden. Die diskrete Fouriertransformation wird derart durchgeführt, dass für zumindest die Trägerfrequenz des Satellitenfunksignals eine Phasenverschiebung ermittelt wird. Die Änderung der Phasenverschiebung zwischen Fouriertransformationen von zeitlich beabstandeten Blöcken des Satellitenfunksignals entspricht dabei einer Frequenzverschiebung des Satellitenfunksignals.

Die Schritte S1 bis S3 können für mehrere Satellitenfunksignale mehrerer Satelliten wiederholt werden. Zudem können die Schritte S1 bis S3 auch für mehrere erste Empfangseinrichtungen, die insbesondere räumlich beabstandet sind, wiederholt werden. Dies ist in Figur 3 durch die neben Schritt S3 abgebildeten Punkte dargestellt.

In Schritt S4 wird durch eine zweite Empfangseinrichtung ein durch einen terrestrischen Sender abgestrahltes terrestrisches Funksignal empfangen. Für dieses terrestrisches Funksignal wird in den Schritten S5 und S6 eine zweite Störinformation bestimmt. Im Schritt S5 wird, wie zu Schritt S2 erläutert, ein Laufzeitunterschied zwischen einem direkt empfangenen Signalanteil und einem am Objekt gesteuerten Signalanteil bestimmt. In Schritt S6 wird, wie zu Schritt S3 beschrieben, eine Frequenzverschiebung des terrestrischen Funksignals aufgrund der Streuung am Objekt bestimmt. Die Schritte S4 bis S6 können für mehrere empfangene terrestrische Funksignale von mehreren terrestrischen Sendern sowie bei Nutzung von mehreren zweiten Empfangseinrichtungen für jede der zweiten Empfangseinrichtungen wiederholt werden. Dies ist durch die neben Schritt S6 abgebildeten Punkte in Figur 3 dargestellt.

Die in den Schritten S2, S3, S5 und S6 bestimmten ersten und zweiten Störinformationen sowie die weiteren bestimmten Störinformationen, die bei Nutzung zusätzlicher erster und/oder zweiter Empfangseinrichtungen bzw. bei Auswertung von Signalen weiterer Satelliten und/oder terrestrischer Sender bereitstehen, werden in Schritt S7 durch die Signalverarbeitungseinrichtung ausgewertet, um zum einen zu ermitteln, ob sich ein Objekt im überwachten Luftraum befindet, und falls dies der Fall ist, welche Eigenschaften dieses Objekt hat, insbesondere an welcher Position es sich befindet und mit welcher Geschwindigkeit es sich in welche Richtung bewegt. In der Signalverarbeitungseinrichtung sind die relativen Positionen der terrestrischen Sender, deren terrestrische Funksignale ausgewertet werden sowie der Satelliten, deren Satellitenfunksignale ausgewertet werden, gespeichert. Werden nicht geostationäre Satelliten im Rahmen des Verfahrens genutzt, so kann die Vorgabe der Satellitenposition auch zeitabhängig erfolgen. Ergänzend können insbesondere durch Satelliten Positionskorrekturen als Teil ihres Satellitenfunksignals übertragen werden, die durch die Signalverarbeitungseinrichtung ausgewertet werden. In Schritt S7 liegen also mehrere Störinformationen, die die jeweiligen Störungen eines Satellitenfunksignals bzw. eines terrestrischen Funksignals beschreiben sowie die geometrische Anordnung der einzelnen Empfangseinrichtungen sowie der genutzten Satelliten und terrestrischen Sender vor. Aus diesen Informationen wird in Schritt S7 bestimmt, ob sich überhaupt ein Objekt im beobachteten Luftraum befindet. Diese Information wird als eine mehrstufige Warninformation in Schritt S8 ausgegeben. Wird ausschließlich aus einer der Störinformationen ermittelt, dass sich ein Objekt im beobachteten Luftraum befindet, so wird eine erste Warnstufe ausgegeben. Wird zumindest in Abhängigkeit einer ersten Störinformation und in Abhängigkeit einer zweiten Störinformation jeweils ermittelt, dass sich ein Objekt im beobachteten Luftraum befindet, so wird eine zweite Warnstufe ausgegeben.

Neben der reinen Anwesenheit eines Objekts im beobachteten Luftraum wird die Position des Objekts im dreidimensionalen Raum als eine erste Eigenschaft des Objekts in Schritt S9 ausgegeben. Die Position des Objekts wird dabei durch Auswertung von wenigstens einer ersten und einer zweiten Störinformation, das heißt in Abhängigkeit wenigstens eines empfangenen Satellitensignals und wenigstens eines terrestrischen Funksignals bestimmt. Dabei wird die Position aus den in Schritt S3 und S6 bestimmten Laufzeitunterschieden ermittelt. Durch jeden der Laufzeitunterschiede ist eine Rotationselipse vorgegeben, von der bekannt ist, dass sich das Objekt auf ihr befindet. Durch ein Schneiden der Rotationselipsen kann die Position des Objekts in nahezu allen Fällen auf zwei mögliche Positionen eingeschränkt werden. Werden neben den beiden in den Schritten S3 und S6 ermittelten Laufzeitunterschieden keine weiteren Laufzeitunterschiede ermittelt, so kann die verbleibende Uneindeutigkeit dadurch aufgehoben werden, dass die in Schritt S2 und S5 ermittelten Dopplerverschiebungen berücksichtigt werden oder wenigstens für zwei aufeinanderfolgende Beobachtungszeiträume die jeweiligen Laufzeitunterschiede berücksichtigt werden. Bei einer Nutzung mehrerer Satelliten oder mehrerer terrestrischer Sender oder mehrerer erster oder zweiter Empfangseinrichtungen kann bereits allein aus den Laufzeitunterschieden zu einem Erfassungszeitpunkt eindeutig die Position des Objekts bestimmt werden.

In Schritt S10 und Schritt S11 werden als weitere Eigenschaften des Objekts Geschwindigkeiten in einer zur Oberfläche der Erde parallelen Fläche und senkrecht hierzu bereitgestellt. Hierzu werden zusätzlich die in Schritt S2 und S5 ermittelten Frequenzverschiebungen ausgewertet. Werden sowohl mehrere Satellitenfunksignale als auch mehrere terrestrische Funksignale ausgewertet, ist es insbesondere möglich, dass die in Schritt S10 ausgegebene Geschwindigkeit parallel zur Erdoberfläche ausschließlich unter Berücksichtigung von ersten Störinformationen, also den in Schritten S2 und S3 ermittelten Informationen, und die in Schritt S11 ausgegebene Geschwindigkeit in Hochrichtung ausschließlich in Abhängigkeit der in Schritt S5 und S6 ermittelten zweiten Störinformationen berechnet werden.

Figur 4 zeigt schematisch den Aufbau einer Erfassungseinrichtung, mit der das zuvor erläuterte Verfahren durchgeführt werden kann. Die Erfassungseinrichtung 1 umfasst dabei einer erste Erfassungseinrichtung 17 mit einer ersten Antenne 23 und einer ersten Signalvorverarbeitungseinrichtung 24 und eine zweite Erfassungseinrichtung 18 mit einer zweiten Empfangsantenne 25 und einer zweiten Signalvorverarbeitungseinrichtung 26. Die erste Antenne 23 dient zum Empfang eines Satellitenfunksignals und die zweite Antenne 25 dient zum Empfang eines terrestrischen Funksignals. Die Signalvorverarbeitungseinrichtung 24 und 26 verstärken die durch die Antennen 23 bzw. 25 empfangenen Signale und führen eine Analog-Digital-Wandlung der Signale durch.

Die digitalisierten Signale werden an die Signalverarbeitungseinrichtung 21 übertragen. Die Signalverarbeitungseinrichtung 21 ist als programmierbare Recheneinrichtung ausgebildet, wobei die Signalverarbeitung durch drei separate Programmmodule erfolgt. Durch die Programmodule 27 und 28 wird wie zu den Schritten S2, S3, S5 und S6 in Figur 3 erläutert, eine erste und eine zweite Störinformation ermittelt. Die Ermittlung der Störinformation erfolgt im Programmmodul 27 für das Satellitenfunksignal und im Programmmodul 28 für das terrestrische Funksignal. Das Satellitenfunksignal und das terrestrische Funksignal werden zur Ermittlung der Störinformation separat verarbeitet, da die ermittelten Größen ausschließlich vom einzelnen empfangenen Signal abhängen.

Die in den Programmodulen 27 und 28 ermittelten Störinformationen werden dem Auswertemodul 29 zugeführt, dass wie zu den Schritten S7 bis S11 in Figur 3 erläutert zum einen bestimmt, ob sich ein Objekt in dem überwachten Luftraum befindet und zum anderen Eigenschaften des Objekts ermittelt. In Abhängigkeit der durch das Auswertemodul 29 ermittelten Daten wird eine Anzeigeeinrichtung 14 angesteuert, um einen Benutzer eine Übersicht über den überwachten Luftraum zu geben. Ergänzend können beim Vorliegen gewisser Bedingungen, also beispielsweise dem Eintreten eines unbekannten Objekts in einen gewissen Teil des Luftraums mit einer gewissen Geschwindigkeit und Richtung, weitere Warnsignale ausgelöst werden.

### Bezugszeichenliste

- 1: Erfassungseinrichtung
- 2: Satellit
- 3: Satellit
- 4: terrestrischer Sender
- 5: terrestrischer Sender
- 6: terrestrischer Sender
- 7: terrestrischer Sender
- 8: Objekt
- 9: Überwachungsbereich
- 10: Überwachungsbereich
- 11: Kommunikationsnetzwerk
- 12: Satellitenfunksignal
- 13: Satellitenfunksignal
- 14: Anzeigeeinrichtung
- 15: terrestrisches Signal
- 16: terrestrisches Signal
- 17: Empfangseinrichtung
- 18: Empfangseinrichtung
- 19: Empfangseinrichtung
- 20: Empfangseinrichtung
- 21: Signalverarbeitungseinrichtung
- 22: Abstand
- 23: Antenne
- 24: Signalvorverarbeitungseinrichtung
- 25: Empfangsantenne
- 26: Signalvorverarbeitungseinrichtung
- 27: Programmmodul
- 28: Programmmodul
- 29: Auswertemodul
- 30: Satellit

- S1 - S11: Schritt

## Patentansprüche

1. Verfahren zum Erkennen des Aufenthalts wenigstens eines Objekts (8) in einem Luftraum und/oder wenigstens einer Eigenschaft des Objekts (8), umfassend die Schritte:
- Empfang wenigstens eines durch einen Satelliten (2, 3, 30) abgestrahlten Satellitenfunksignals (12) durch wenigstens eine erste Empfangseinrichtung (17, 19) und wenigstens eines durch einen terrestrischen Sender (4, 5, 6, 7) abgestrahlten terrestrischen Funksignals (15) durch wenigstens eine zweite Empfangseinrichtung (18, 20),
- Ermittlung einer ersten Störinformation, die eine Störung des Satellitenfunksignals (12, 13) durch das Objekt (8) beschreibt, und einer zweiten Störinformation, die eine Störung des terrestrischen Funksignals (15, 16) durch das Objekt (8) beschreibt, durch eine Signalverarbeitungseinrichtung (21), und
- Ermittlung, ob sich das Objekt (8) im Luftraum befindet und/oder der Eigenschaft des Objekts (8) durch gemeinsame Auswertung der ersten und der zweiten Störinformation durch die Signalverarbeitungseinrichtung (21).

2. Verfahren nach Anspruch 1,
**dadurch gekennzeichnet,**
**dass** die erste und/oder die zweite Störinformation in Abhängigkeit einer Dopplerverschiebung wenigstens eines Frequenzbandes des Satellitenfunksignals (12, 13) bzw. des terrestrischen Funksignals (15, 16) aufgrund einer Streuung am Objekt (8) ermittelt werden.

3. Verfahren nach Anspruch 1 oder 2,
**dadurch gekennzeichnet,**
**dass** das Satellitenfunksignal (12, 13) und/oder das terrestrische Funksignal (15, 16) einen direkt vom Satellit (2, 3, 30) bzw. vom terrestrischen Sender (4, 5, 6, 7) empfangenen Signalanteil (12, 15) und einen am Objekt (8) gestreuten Signalanteil (13, 16) umfassen, wobei die erste und/oder die zweite Störinformation in Abhängigkeit eines Laufzeitunterschieds zwischen dem direkt empfangenen (12, 15) und dem gestreuten Signal (13, 16) bestimmt werden.

4. Verfahren nach einem der vorangehenden Ansprüche,
**dadurch gekennzeichnet,**
**dass** als terrestrischer Sender (4, 5, 6, 7) ein Rundfunksender oder ein einem Mobilfunknetz zugeordneter Sender verwendet wird.

5. Verfahren nach einem der vorangehenden Ansprüche,
**dadurch gekennzeichnet,**
**dass** als Satellit (2, 3, 30) ein einem Positionsbestimmungssystem zugeordneter Satellit, ein Kommunikationssatellit oder ein Rundfunksatellit verwendet wird.

6. Verfahren nach einem der vorangehenden Ansprüche,
**dadurch gekennzeichnet,**
**dass** der terrestrische Sender (4, 5, 6, 7) und/oder der Satellit (2, 3, 30) Nutzinformationen digital überträgt.

7. Verfahren nach einem der vorangehenden Ansprüche,
**dadurch gekennzeichnet,**
**dass** mehrere erste und/oder zweite Empfangsvorrichtungen (17, 18, 19, 20) genutzt werden, die räumlich beabstandet sind.

8. Erfassungseinrichtung zum Erkennen des Aufenthalts wenigstens eines Objekts (8) in einem Luftraum und/oder wenigstens einer weiteren Eigenschaft des Objekts (8),
**dadurch gekennzeichnet,**
**dass** die Erfassungseinrichtung (1) wenigstens eine erste Empfangseinrichtung (17, 19) zum Empfang wenigstens eines durch einen Satelliten (2, 3, 30) abgestrahlten Satellitenfunksignals (12) und wenigstens eine zweite Empfangseinrichtung (18, 20) zum Empfang wenigstens eines durch einen terrestrischen Sender (4, 5, 6, 7) abgestrahlten terrestrischen Funksignals (15) sowie eine Signalverarbeitungseinrichtung (21) aufweist, wobei die Signalverarbeitungseinrichtung (21) zur Ermittlung einer ersten Störinformation, die eine Störung des Satellitenfunksignals (12, 13) durch das Objekt (8) beschreibt, und einer zweiten Störinformation, die eine Störung des terrestrischen Funksignals (15, 16) durch das Objekt (8) beschreibt, sowie zur Ermittlung, ob sich das Objekt (8) im Luftraum befindet und/oder der Eigenschaft des Objekts (8) durch gemeinsame Auswertung der ersten und der zweiten Störinformation dient.

9. Erfassungseinrichtung nach Anspruch 8,
**dadurch gekennzeichnet,**
**dass** die Signalverarbeitungseinrichtung. (21) zur Ermittlung der ersten und/oder der zweiten Störinformation in Abhängigkeit einer Dopplerverschiebung wenigstens eines Frequenzbandes des Satellitenfunksignals (12, 13) bzw. des terrestrischen Funksignals (15, 16) aufgrund einer Streuung am Objekt (8) ausgebildet ist.

10. Erfassungseinrichtung nach Anspruch 8 oder 9,
**dadurch gekennzeichnet,**
**dass** der terrestrische Sender (4, 5, 6, 7) ein Rundfunksender oder ein einem Mobilfunknetz zugeordneter Sender ist.

11. Erfassungseinrichtung nach einem der Ansprüche 8 bis 10,
**dadurch gekennzeichnet,**
**dass** der Satellit (2, 3, 30) ein einem Positionsbestimmungssystem zugeordneter Satellit, ein Kommunikationssatellit oder ein Rundfunksatellit ist.

## Claims

1. Method for detecting the residence of at least one object (8) in an air space and/or at least one property of the object (8), comprising the steps of:
- receiving at least one satellite radio signal (12), emitted by a satellite (2, 3, 30), by means of at least one first reception device (17, 19) and of at least one terrestrial radio signal (15), emitted by a terrestrial transmitter (4, 5, 6, 7), by means of at least one second reception device (18, 20),
- ascertaining a first piece of interference information, describing interference with the satellite radio signal (12, 13) by the object (8), and a second piece of interference information, describing interference with the terrestrial radio signal (15, 16) by the object (8), by means of a signal processing device (21), and
- ascertaining whether the object (8) is in the air space and/or the property of the object (8) by means of joint evaluation of the first and second pieces of interference information by the signal processing device (21).

2. Method according to Claim 1,
**characterized**
**in that** the first and/or the second piece of interference information is/are ascertained on the basis of a Doppler shift in at least one frequency band of the satellite radio signal (12, 13) or of the terrestrial radio signal (15, 16) on account of a scatter at the object (8).

3. Method according to Claim 1 or 2,
**characterized**
**in that** the satellite radio signal (12, 13) and/or the terrestrial radio signal (15, 16) comprise (s) a signal component (12, 15) received directly from the satellite (2, 3, 30) or from the terrestrial transmitter (4, 5, 6, 7) and a signal component (13, 16) scattered at the object (8), wherein the first and/or the second piece of interference information is/are determined on the basis of a propagation time difference between the directly received (12, 15) and the scattered (13, 16) signal.

4. Method according to one of the preceding claims,
**characterized**
**in that** the terrestrial transmitter (4, 5, 6, 7) used is a broadcast radio transmitter or a transmitter associated with a mobile radio network.

5. Method according to one of the preceding claims,
**characterized**
**in that** the satellite (2, 3, 30) used is a satellite associated with a position determination system, a communication satellite or a broadcast radio satellite.

6. Method according to one of the preceding claims,
**characterized**
**in that** the terrestrial transmitter (4, 5, 6, 7) and/or the satellite (2, 3, 30) transmit(s) useful information digitally.

7. Method according to one of the preceding claims,
**characterized**
**in that** multiple first and/or second reception apparatuses (17, 18, 19, 20) are used that are at physical intervals.

8. Detection device for detecting the residence of at least one object (8) in an air space and/or at least one further property of the object (8),
**characterized**
**in that** the detection device (1) has at least one first reception device (17, 19) for receiving at least one satellite radio signal (12) emitted by a satellite (2, 3, 30) and at least one second reception device (18, 20) for receiving at least one terrestrial radio signal (15) emitted by a terrestrial transmitter (4, 5, 6, 7) and also a signal processing device (21), wherein the signal processing device (21) is used for ascertaining a first piece of interference information, describing interference with the satellite radio signal (12, 13) by the object (8), and a second piece of interference information, describing interference with the terrestrial radio signal (15, 16) by the object (8), and also for ascertaining whether the object (8) is in the air space and/or the property of the object (8) by means of joint evaluation of the first and second pieces of interference information.

9. Detection device according to Claim 8,
**characterized**
**in that** the signal processing device (21) is designed for ascertaining the first and/or the second piece of interference information on the basis of a Doppler shift in at least one frequency band of the satellite radio signal (12, 13) or of the terrestrial radio signal (15, 16) on account of a scatter at the object (8).

10. Detection device according to Claim 8 or 9,
**characterized**
**in that** the terrestrial transmitter (4, 5, 6, 7) is a broadcast radio transmitter or a transmitter associated with a mobile radio network.

11. Detection device according to one of Claims 8 to 10,
**characterized**
**in that** the satellite (2, 3, 30) is a satellite associated with a position determination system, a communication satellite or a broadcast radio satellite.

## Revendications

1. Procédé de reconnaissance du séjour d'au moins un objet (8) dans un espace aérien et/ou d'au moins une propriété de l'objet (8), comprenant les étapes suivantes :
- réception d'au moins un signal radioélectrique de satellite (12) émis par un satellite (2, 3, 30) par au moins un premier dispositif de réception (17, 19) et d'au moins un signal radioélectrique terrestre (15) émis par un émetteur terrestre (4, 5, 6, 7) par au moins un deuxième dispositif de réception (18, 20),
- détermination d'une première information de parasite, qui décrit une perturbation du signal radioélectrique de satellite (12, 13) par l'objet (8), et d'une deuxième information de parasite, qui décrit une perturbation du signal radioélectrique terrestre (15, 16) par l'objet (8), par un dispositif de traitement de signal (21) et
- détermination si l'objet (8) se trouve dans l'espace aérien et/ou de la propriété de l'objet (8) par une interprétation commune de la première et de la deuxième information de parasite par le dispositif de traitement de signal (21).

2. Procédé selon la revendication 1, **caractérisé en ce que** la première et/ou la deuxième informations de parasite sont déterminées en fonction d'un décalage par effet Doppler d'au moins une bande de fréquences du signal radioélectrique de satellite (12, 13) ou du signal radioélectrique terrestre (15, 16) en raison d'une dispersion au niveau de l'objet (8).

3. Procédé selon la revendication 1 ou 2, **caractérisé en ce que** le signal radioélectrique de satellite (12, 13) et/ou le signal radioélectrique terrestre (15, 16) comprennent une part de signal (12, 15) reçue directement par le satellite (2, 3, 30) ou par l'émetteur terrestre (4, 5, 6, 7) et une part de signal (13, 16) dispersée au niveau de l'objet (8), la première et/ou la deuxième informations de parasite étant déterminées en fonction d'une différence de temps de propagation entre le signal reçu directement (12, 15) et celui dispersé (13, 16).

4. Procédé selon l'une des revendications précédentes, **caractérisé en ce que** l'émetteur terrestre (4, 5, 6, 7) utilisé est un émetteur de radiodiffusion ou un émetteur de radiocommunication mobile.

5. Procédé selon l'une des revendications précédentes, **caractérisé en ce que** le satellite (2, 3, 30) utilisé est un satellite associé à un système de détermination de position, un satellite de communication ou un satellite de radiodiffusion.

6. Procédé selon l'une des revendications précédentes, **caractérisé en ce que** l'émetteur terrestre (4, 5, 6, 7) et/ou le satellite (2, 3, 30) transmet des informations utiles sous forme numérique.

7. Procédé selon l'une des revendications précédentes, **caractérisé en ce que** plusieurs premiers et/ou deuxièmes arrangements de réception (17, 18, 19, 20) sont utilisés, lesquels sont spatialement espacés.

8. Dispositif de détection destiné à reconnaître le séjour d'au moins un objet (8) dans un espace aérien et/ou d'au moins une propriété supplémentaire de l'objet (8) ,
caractérisé en ce
le dispositif de détection (1) possède au moins un premier dispositif de réception (17, 19) destiné à recevoir au moins un signal radioélectrique de satellite (12) émis par un satellite (2, 3, 30) et au moins un deuxième dispositif de réception (18, 20) destiné à recevoir au moins un signal radioélectrique terrestre (15) émis par un émetteur terrestre (4, 5, 6, 7) ainsi qu'un dispositif de traitement de signal (21), le dispositif de traitement de signal (21) servant à déterminer une première information de parasite, qui décrit une perturbation du signal radioélectrique de satellite (12, 13) par l'objet (8), et une deuxième information de parasite, qui décrit une perturbation du signal radioélectrique terrestre (15, 16) par l'objet (8), ainsi qu'à déterminer si l'objet (8) se trouve dans l'espace aérien et/ou la propriété de l'objet (8) par une interprétation commune de la première et de la deuxième information de parasite.

9. Dispositif de détection selon la revendication 8, **caractérisé en ce que** le dispositif de traitement de signal (21) est configuré pour déterminer la première et/ou la deuxième informations de parasite en fonction d'un décalage par effet Doppler d'au moins une bande de fréquences du signal radioélectrique de satellite (12, 13) ou du signal radioélectrique terrestre (15, 16) en raison d'une dispersion au niveau de l'objet (8) .

10. Dispositif de détection selon la revendication 8 ou 9, **caractérisé en ce que** l'émetteur terrestre (4, 5, 6, 7) est un émetteur de radiodiffusion ou un émetteur de radiocommunication mobile.

11. Dispositif de détection selon l'une des revendications 8 à 10, **caractérisé en ce que** le satellite (2, 3, 30) est un satellite associé à un système de détermination de position, un satellite de communication ou un satellite de radiodiffusion.
